# EUROPEAN PATENT SPECIFICATION

(11) **EP 1 474 979 B1**
(45) Date of publication and mention of the grant of the patent: **01.08.2007**
(21) Application number: 03258042.5
(22) Date of filing: 19.12.2003
(51) Int. Cl.: A21B 7/00

(54) **Bread maker**
Brotbackgerät
Appareil de cuisson de pain

(30) Priority: 07.05.2003 KR 2003028976
(43) Date of publication of application: 10.11.2004
(73) Proprietor: SAMSUNG ELECTRONICS CO., LTD., Suwon-City, Kyungki-do (KR)
(72) Inventor: Sung, Han-jun, Paldal-ku, Suwon city Kyungki-do (KR); Kwon, Yong-hyun, Suwon city Kyungki-do (KR); Kim, Chul, Anyang city Kyungki-do (KR); Lee, Tae-uk, Suwon city Kyungki-do (KR); Lee, Jang-woo, Suwon city Kyungki-do (KR); Park, Jae-ryong, Paldal-ku Suwon-city Kyungki-do (KR); Lim, Dong-bin, Paldal-ku Suwon city Kyungki-do (KR)
(74) Representative: Brandon, Paul Laurence

(56) References cited:
- US-A- 4 803 086
- US-A- 5 146 840
- US-A- 5 947 009

## Description

The present invention relates to bread makers, and, more particularly, though not exclusively to bread makers having improved kneading drums.

Conventionally, various bread makers have been developed to allow a user to easily make bread automatically.

The conventional bread maker typically includes a main body forming an oven compartment and an electrical components compartment, and a pair of kneading drums that are rotatably provided in parallel inside the oven compartment and spaced apart from each other, and that allow opposite ends of a mixing bag filled with raw materials (ingredients) for bread to be wound thereon.
Each of the kneading drums of the conventional bread maker includes a cylindrical drum body having a first side rotatably supported by an inside wall of the oven compartment and a second side engaged with a drum driving part such as a motor.

A first supporter, rotatably supported by the sidewall of the oven compartment, is provided in one end part of the drum body as one body, and a second supporter, which is extended toward the component compartment and connected to the drum driving part, is provided in the other end part of the drum body as one body.

Because the first and second supporters are formed in the drum body as one body, the kneading drum of the conventional bread maker is rotatably supported in the oven compartment.

However, because the kneading drums of the conventional bread maker are provided with the first and second supporters formed in the drum body as one body, the kneading drum has to be replaced as a whole when the first and second supporters are replaced.

Thus, there is a need for the first and second supporters to be individually replaceable by detaching the first and second supporters from the kneading drum. Also, when the kneading drums are operated, there is a need for the first and second supporters not to freewheel or separate from the drum body.

US-A-4803086 discloses an apparatus for automatically making food products in piece form, such as loaves of bread, from dough-like substances, which comprises a housing having holding drums adapted to be fixed at either end of a flexible sealing bag containing the ingredients. The bag is moved to and fro through slit openings to perform kneading of the dough and then baked in a chamber. US-A-4803086 discloses the features of the precharacterising portion of Claim 1.

It is an aim of preferred embodiments of the present invention to provide a bread maker having a first supporter and a second supporter that are detachably provided in a drum body of a kneading drum to be replaced, and that do not freewheel or separate from the drum body during operation of the kneading drum.

According to the present invention in a first aspect, there is provided a bread maker having an oven compartment, an electrical components compartment, and kneading drums spaced apart from each other inside the oven compartment to knead bread ingredients contained in a mixing bag, each kneading drum including a drum body on which an end of the mixing bag is wound; characterised in that the bread maker further comprises: a first supporter detachably engaging a first end of the drum body having a non-cylindrical cross-section, and engaging a first sidewall of the oven compartment and being rotatably supported by the first sidewall of the oven compartment; and a second supporter detachably engaging a second end of the drum body having a non-cylindrical cross-section, and engaging a second sidewall of the oven compartment and being rotatably supported by the second sidewall of the oven compartment.

Suitably, the bread maker further includes a drum driving part in the electrical components compartment to rotate the kneading drums.

Suitably, the drum body has a plurality of holding projections to hold the end of the mixing bag, the holding projections being spaced apart from each other by a predetermined distance along a lengthwise direction of the drum body.

Suitably, the first supporter has a first engaging shaft inserted into the first end of the drum body having a non-cylindrical cross-section; and a first supporting shaft rotatably supported by the first sidewall of the oven compartment.

Suitably, the first supporter further includes a first insertion limiting part between the first engaging shaft and the first supporting shaft, the first insertion limiting part having a diameter greater than that of the first engaging shaft and the first supporting shaft.

Suitably, the second supporter includes a second engaging shaft inserted into the second end of the drum body having a non-cylindrical cross-section; a second supporting shaft rotatably supported by the second sidewall of the oven compartment; and a power transmission shaft projecting from the second supporting shaft toward the electrical components compartment and connecting to the drum driving part.

Suitably, the second supporter further includes a second insertion limiting part between the second engaging shaft and the second supporting shaft, the second insertion limiting part having a diameter greater than that of the second engaging shaft and the second supporting shaft.

Further features of the present invention are set out in the appended claims.

The present invention will become apparent and more readily appreciated from the following description of a preferred embodiment, by way of example only, taken in conjunction with the accompany drawings, of which:
FIG. 1 is a perspective view of a bread maker according to an embodiment of the present invention, with a door thereof opened;
FIG. 2 is a perspective view of a kneading drum of the bread maker in FIG. 1;
FIG. 3 is an exploded perspective view of the kneading drum in FIG. 2; and
FIG. 4 is a view of a mixing bag filled with ingredients for bread and used in the bread maker of FIG. 1.

Hereinafter, an embodiment of the present invention will be described in detail with reference to the attached drawings, wherein the like reference numerals refer to the like elements throughout. The present invention may, however, be embodied in many different forms and should not be construed as being limited to the embodiment set forth herein. Rather, this embodiment is provided so that the present disclosure will be thorough and complete, and will fully convey the concept of the invention to those skilled in the art.

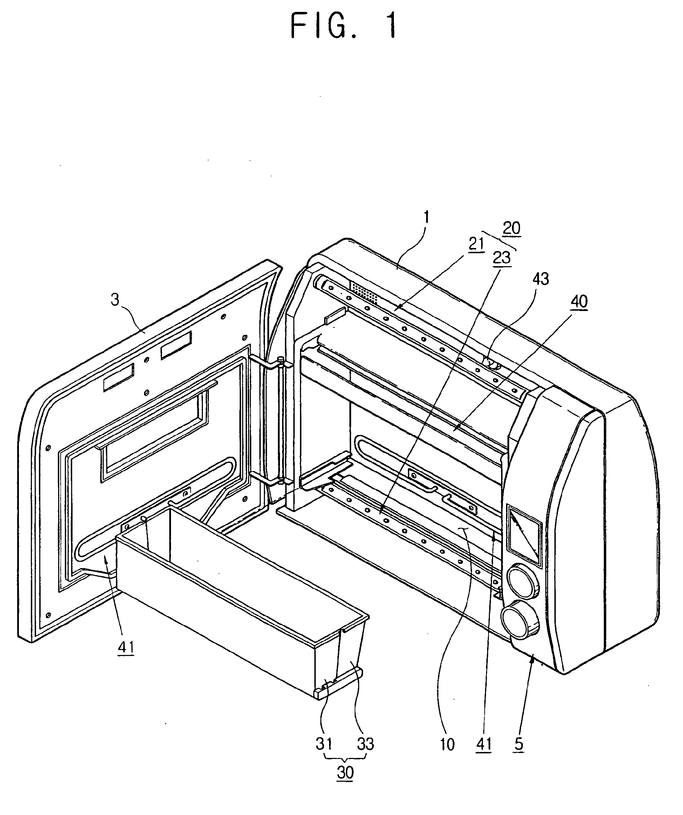

As shown in FIG. 1, a bread maker according to an embodiment of the present invention includes a main body 1 formed with an oven compartment 10 and an electrical components compartment (not shown), a door 3 provided in the front of the main body 1 to open and close a front opening of the oven compartment 10, a control panel 5 provided in the front of the main body 1 to display the operating status of the bread maker, and a pair of kneading drums 20 provided in the oven compartment 10 in parallel and spaced apart from each other. The bread maker according to this embodiment of the present invention further includes a drum driving part (not shown), which is provided in the electrical components compartment, that rotates the kneading drums 20.

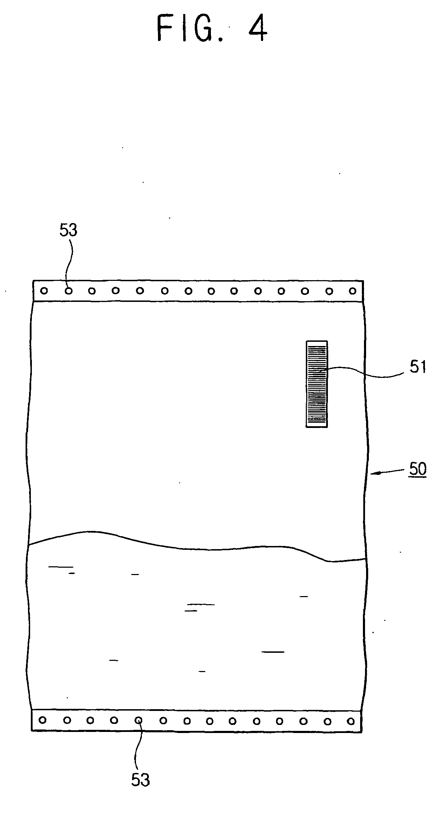

In an upper and a lower part of an inside of the oven compartment 10, an upper kneading drum 21 and a lower kneading drum 23, which form the pair of kneading drums 20, are provided, wherein opposite ends of a mixing bag 50 (refer to FIG. 4) filled with raw materials (ingredients) for bread are wound onto the kneading drums 20. In a lower part of the oven compartment 10, a baking tray 30, which contains completely kneaded ingredients for baking, is provided between the upper kneading drum 21 and the lower kneading drum 23. The baking tray 30 includes a first tray 31 and a second tray 33 having "L"-shaped cross-sections that are symmetrical to one another. The first tray 31 and the second tray 33 combine to form a box with a top opening. In an upper part of the oven compartment 10, a pair of kneading members 40 provided between the upper kneading drum 21 and the baking tray 30 knead dough in the mixing bag and prevent the dough kneaded in the mixing bag 50 from moving beyond the baking tray 30 to the upper kneading drum 21. The dough in the baking tray 30 is baked using heaters 41 in the oven compartment 10 and in the door 3. Behind the upper kneading drum 21 in the upper part of the oven compartment 10 is a bar code scanner 43 that reads a bar code 51 FIG. 4) attached to the mixing bag 50.

A drum driving part (not shown) is provided in the electrical components compartment (not shown) to rotate the kneading drums 20 in forward and reverse directions, and includes a driving motor (not shown) rotating the lower kneading drum 23 and a belt (not shown) linking the lower kneading drum 23 and the upper kneading drum 21 to rotate together. However, the driving motor may rotate the upper kneading drum 21.

The upper kneading drum 21 and the lower kneading drum 23 have similar constructions.

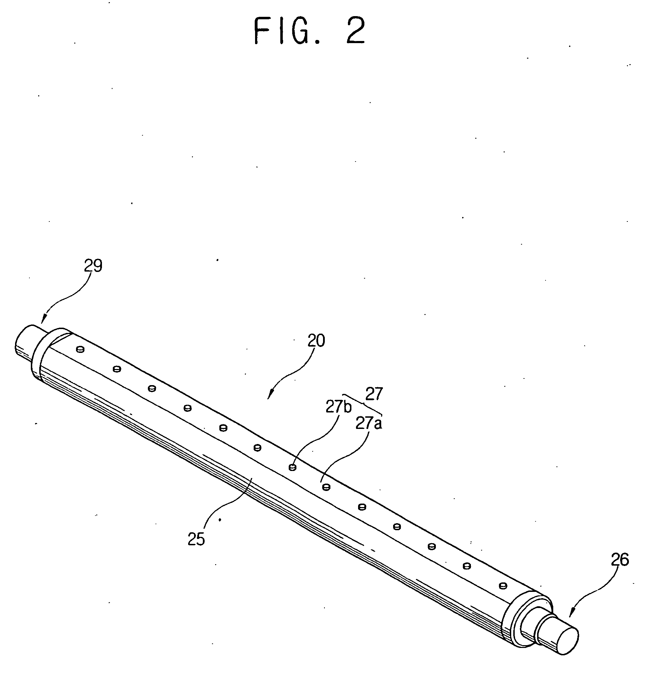

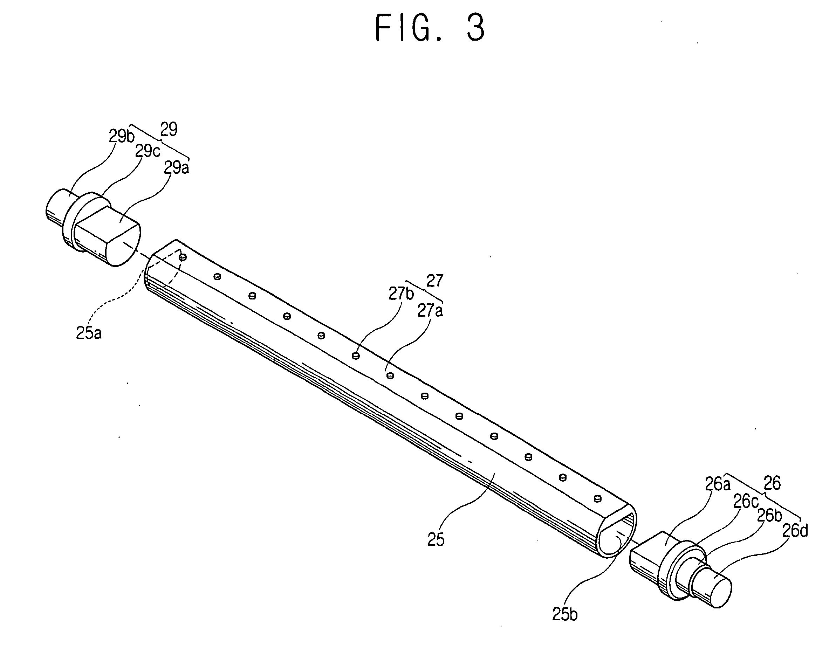

As shown in FIGS. 2 and 3, each of the kneading drums 20, according to this embodiment of the present invention, includes a drum body 25 rotatably engaged with the oven compartment 10, a first supporter 29 and a second supporter 26, which are detachably connected to the drum body 25 and rotatably connected to a sidewall of the oven compartment 10 and driven by the drum driving part (not shown) provided in the electrical components compartment (not shown).

The drum body 25 has a cylindrical shape with a predetermined length. In one portion of the drum body 25, a holder 27 holding an end of the mixing bag 50 is provided. As shown in FIG. 3, in a first end of the drum body 25 is formed a first accommodator 25a to accommodate a first engaging shaft 29a (described below) of the first supporter 29, and in a second end of the drum body 25 is formed a second accommodator 25b to accommodate a second engaging shaft 26a (described below) of the second supporter 26.

The holder 27 has a mixing bag contacting part 27a, which is formed in a cylindrical surface of the drum body 25 as a plane shape along a lengthwise direction of the drum body 25, and a plurality of holding projections 27b projecting from the mixing bag contacting part 27a and spaced apart from each other by a predetermined distance along the lengthwise direction of the drum body 25. The holder 27 may be attached and detached from the drum body 25, and may be slidably engaged with the drum body 25 along the lengthwise direction of the drum body 25.

Thus, holding holes 53 (FIG. 4) of the mixing bag 50 can be easily held in the holding projections 27b formed in the mixing bag contacting part 27a such that one of the ends of the mixing bag 50, formed with a plurality of holding holes 53, contacts the mixing bag contacting part 27a.

The first engaging shaft 29a of the first supporter 29 is inserted into a first end of the drum body 25 having a non- circular cross-section, and a first supporting shaft 29b is rotatably supported by a first sidewall of the oven compartment 10. The first supporter 29 has a first insertion limiting part 29c between the first engaging shaft 29a and the first supporting shaft 29b with a diameter greater than that of the first engaging shaft 29a and the first supporting shaft 29b.

The first engaging shaft 29a, which has a non-circular cross-section, connects to the first accommodator 25a of the drum body 25. The first engaging shaft 29a is pressed and inserted into the first accommodator 25a to fit into the first accommodator 25a. Also, the first engaging shaft 29a has a non-circular cross-section, which is formed by cutting away one part of a cylindrical shape. However, the first engaging shaft 29a may have a polygonal cross-section such as a triangular or rectangular cross-section. Therefore, the first supporter 29 is easily combined to the first end of the drum body 25. After the first engaging shaft 29a is inserted into the first accommodator 25a, the first engaging shaft 29a and the first accommodator 25a may be screw-engaged using screws or pins, for example.

The first supporting shaft 29b is rotatably inserted into the first sidewall of the oven compartment 10 and supports the first end of the drum body 25. The first supporting shaft 29b may engage a bearing (not shown) provided in the first sidewall of the oven compartment 10 for smooth rotation of the drum body 25.

The first insertion limiting part 29c contacts the first end of the drum body 25 through the first engaging shaft 29a and the first sidewall of the oven compartment 10 through the first shaft 29b. The first insertion limiting part 29c limits the distance the first supporter 29 can be inserted into the drum body 25.

The first supporter 29 rotatably supports the drum body 25 by engaging the first accommodator 25a and the first sidewall of the oven compartment 10. Also, because the first supporter 29 detachably engages the first accommodator 25a of the drum body 25 having a non-circular cross-section, the first supporter 29 does not freewheel or separate from the drum body 25 while the kneading drum operates, and can be detached from the drum body 25 and replaced, as needed.
The second supporter 26 includes the second engaging shaft 26a, which is inserted into a second end of the drum body 25 having a non- circular cross-section, a second supporting shaft 26b rotatably supported by the second sidewall of the oven compartment 10, and a power transmission shaft 26d extending from the second supporting shaft 26b toward the electrical components compartment and connecting to the drum driving part. The second supporter 26 has a second insertion limiting part 26c between the second engaging shaft 26a and the second supporting shaft 26b, with a diameter greater than that of the second engaging shaft 26a and the second shaft 26b.
The second engaging shaft 26a, which has a non-circular cross-section, is inserted into and engages the second accommodator 25b of the drum body 25. When the second engaging shaft 26a engages the second accommodator 25b, the second engaging shaft 26a is pressed and inserted into the second accommodator 25b to fit into the second accommodator 25b. Also, the second engaging shaft 26a has a non-circular cross-section, which is formed by cutting away one part of a cylindrical shape. However, the second engaging shaft 26a may have a polygonal cross-section such as a triangular or rectangular cross-section. Therefore, the second supporter 26 is easily combined with the second end of the drum body 25. After the second engaging shaft 26a is inserted into the second accommodator 25b, the second engaging shaft 26a and the second accommodator 25b may be screw-engaged using screws or pins, for example.

The second supporting shaft 26b is rotatably inserted into the second sidewall of the oven compartment 10 and supports the second end of the drum body 25. The second supporting shaft 26b may engage a bearing (not shown) provided in the second sidewall of the oven compartment 10 for smooth rotation of the drum body 25.

The power transmission shaft 26d projects outward from the second supporting shaft 26b, and engages the belt (not shown) of the drum driving part (not shown) on a circumference of the power transmission shaft 26d. The power transmission shaft 26d of the second supporter 26, which is coupled with a rotation shaft (not shown) of the driving motor (not shown), of the upper kneading drum or the lower kneading drum 23 engages the rotation shaft of the driving motor by a coupling, etc.

The second insertion limiting part 26c contacts the second end of the drum body 25 through the second accommodator 25b of the drum body 25 and the second engaging shaft 26a, and the second sidewall of the oven compartment 10 through the second supporting shaft 26b.

The second supporter 26 rotatably supports the drum body 25 by engaging the second accommodator 25b of the drum body 25 and the second sidewall of the oven compartment 10. Also, because the second supporter 26 detachably engages the second accommodator 25b of the drum body 25 having a non-circular cross-section, the second supporter 26 does not freewheel or separate from the drum body 25 while the kneading drum operates, and can be detached from the drum body 25 and replaced, as needed.

The kneading drums 20 of the bread maker according to this embodiment of the present invention each include the drum body 25 allowing an end of the mixing bag 50 to be wound thereon, the first supporter 29 inserted into one end of the drum body 25 having a non-circular cross-section, and the second supporter 26 inserted into the other end of the drum body 25 having a non-circular cross-section. Thus, the first supporter 29 and the second supporter 26 do not freewheel or separate from the drum body 25, and can be detached from the drum body 25 and replaced, as necessary.

As described above, according to a preferred embodiment of the present invention, the first supporter 29 and the second supporter 26 can be prevented from freewheeling or separating from the drum body 25, and can be detached from the drum body 25 and replaced, as necessary.

Although an embodiment of the present invention has been shown and described, it will be appreciated by those skilled in the art that changes may be made in this embodiment without departing from the principles of the invention, the scope of which is defined in the appended claims.

## Claims

1. A bread maker having an oven compartment (10), an electrical components compartment, and kneading drums (20) spaced apart from each other inside the oven compartment (10) to knead bread ingredients contained in a mixing bag (50), each kneading drum (20) comprising:
a drum body (25) on which an end of the mixing bag (50) is wound; **characterised in that** the bread maker further comprises:
a first supporter (29) detachably engaging a first end of the drum body (25) having a non-cylindrical cross-section, and engaging a first sidewall of the oven compartment (10) and being rotatably supported by the first sidewall of the oven compartment (10); and
a second supporter (26) detachably engaging a second end of the drum body (25) having a non-cylindrical cross-section, and engaging a second sidewall of the oven compartment (10) and being rotatably supported by the second sidewall of the oven compartment (10).

2. The bread maker according to claim 1, further comprising a drum driving part in the electrical components compartment to rotate the kneading drums (20).

3. The bread maker according to claim 2, wherein the drum body (25) comprises a plurality of holding projections (27b) to hold the end of the mixing bag (50), the holding projections (27b) being spaced apart from each other by a predetermined distance along a lengthwise direction of the drum body (25).

4. The bread maker according to claim 2 or claim 3, wherein the first supporter (29) comprises:
a first engaging shaft (29a), having a non-cylindrical cross-section, inserted into the first end of the drum body (25); and
a first supporting shaft (29b) rotatably supported by the first sidewall of the oven compartment (10).

5. The bread maker according to claim 4, wherein the first supporter (29) further comprises a first insertion limiting part (29c) between the first engaging shaft (29a) and the first supporting shaft (29b), the first insertion limiting part (29c) having a diameter greater than that of the first engaging shaft (29a) and the first supporting shaft (29b).

6. The bread maker according to any one of claims 2-5, wherein the second supporter (26) comprises:
a second engaging shaft (26a), having a non-cylindrical cross-section, inserted into the second end of the drum body (25);
a second supporting shaft (26b) rotatably supported by the second sidewall of the oven compartment (10); and
a power transmission shaft (26d) projecting from the second supporting shaft (26b) toward the electrical components compartment and connecting to the drum driving part.

7. The bread maker according to claim 6, wherein the second supporter (26) further comprises a second insertion limiting part (26c) between the second engaging shaft (26a) and the second supporting shaft (26b), the second insertion limiting part (26c) having a diameter greater than that of the second engaging shaft (26a) and the second supporting shaft (26b).

8. The bread maker according to claim 7, wherein the first insertion limiting part (26c) limits the distance the first supporter (29) can be inserted into the drum body (25), and the second insertion limiting part (26c) limits the distance the second supporter (26) can be inserted into the drum body (25).

9. The bread maker according to any one of claims 4-8, wherein the drum body (25) comprises a first accommodator (25a) having a non-circular cross-section to accommodate the first engaging shaft (29a) of the first supporter (29), the first engaging shaft (29a) being pressed and inserted into the first accommodator (25a) to fit into the first accommodator (25a), thereby preventing the first supporter (29) from freewheeling or separating from the drum body (25) during operation of the kneading drums (20).

10. The bread maker according to claim 9, wherein the drum body (25) comprises a second accommodator (25b) having a non-circular cross-section to accommodate the second engaging shaft (26a) of the second supporter (26), the second engaging shaft (26a) being pressed and inserted into the second accommodator (25b) to fit into the second accommodator (25b), thereby preventing the second supporter (26) from freewheeling or separating from the drum body (25) during operation of the kneading drums (20).

11. The bread maker according to any one of claims 4-10, wherein the first engaging shaft has a polygonal cross-section, and the second engaging shaft (26a) has a polygonal cross-section.

12. The bread maker according to any one of claims 6-10, further comprising a bearing in the first sidewall of the oven compartment (10), the first supporting shaft (29b) engaging the bearing to smoothly rotate the drum body (25), and a bearing in the second sidewall of the oven compartment (10), the second supporting shaft (26a) engaging the bearing to smoothly rotate the drum body (25).

13. The bread maker according to any one of claims 6-12, wherein the first supporting shaft (20b) supports the first end of the drum body (25), and the second supporting shaft (26b) supports the second end of the drum body (25).

14. The bread maker according to any preceding claim, wherein the drum body (25) comprises a holder (27) detachably connected to the drum body (25) to hold the end of the mixing bag (50), the holder (27) comprising:
a mixing bag contacting part (27a) formed in a cylindrical surface of the drum body (25) as a plane shape along a lengthwise direction of the drum body; and
a plurality of holding projections (27b) projecting from the mixing bag contacting part to engage and hold the end of the mixing bag (50), the holding projections (27b) being spaced apart from each other by a predetermined distance along the lengthwise direction of the drum body (25).

## Patentansprüche

1. Brotherstellungsvorrichtung mit einem Ofenfach (10), einem Fach für elektrische Komponenten und Knettrommeln (20), die innerhalb des Ofenfaches (10) voneinander beabstandet sind, um Brotzutaten, die in einem Mischbeutel (50) enthalten sind, zu kneten, wobei jede Knettrommel (20) aufweist:
einen Trommelkörper (25), auf den ein Ende des Mischbeutels (50) gewickelt ist;
**dadurch gekennzeichnet, dass**
die Brotherstellungsvorrichtung ferner aufweist:
eine erste Stützeinrichtung (29), die lösbar mit einem ersten Ende des Trommelkörpers (25), der einen nicht-zylindrischen Querschnitt hat, in Eingriff ist, und die mit einer ersten Seitenwand des Ofenfaches (10) in Eingriff ist und drehbar durch die erste Seitenwand des Ofenfaches (10) gehalten ist; und eine zweite Stützeinrichtung (26), die lösbar mit einem zweiten Ende des Trommelkörpers (25), der einen nicht-zylindrischen Querschnitt hat, in Eingriff ist, und die mit einer zweiten Seitenwand des Ofenfaches (10) in Eingriff ist und drehbar durch die zweite Seitenwand des Ofenfaches (10) gehalten ist.

2. Brotherstellungsvorrichtung nach Anspruch 1, die ferner ein Trommelantriebsteil in dem Fach für die elektrischen Komponenten aufweist, um die Knettrommeln (20) zu drehen.

3. Brotherstellungsvorrichtung nach Anspruch 2, wobei der Trommelkörper (25) mehrere Haltevorsprünge (27b) umfasst, um das Ende des Mischbeutels (50) zu halten, wobei die Haltevorsprünge (27b) um einen vorbestimmten Abstand entlang einer Längsrichtung des Trommelkörpers (25) voneinander beabstandet sind.

4. Brotherstellungsvorrichtung nach Anspruch 2 oder 3, wobei die erste Stützeinrichtung (29) aufweist:
einen ersten Eingriffsschaft (29a) mit einem nicht-zylindrischen Querschnitt, der in das erste Ende des Trommelkörpers (25) eingesetzt ist; und
einen ersten Stützschaft (29b), der drehbar durch die erste Seitenwand des Ofenfaches (10) gehalten ist.

5. Brotherstellungsvorrichtung nach Anspruch 4, wobei die erste Stützeinrichtung (29) ferner ein erstes Einsetzbeschränkungsteil (29c) zwischen dem ersten Eingriffsschaft (29a) und dem ersten Stützschaft (29b) aufweist, wobei das erste Einsetzbeschränkungsteil (29c) einen Durchmesser aufweist, der größer als derjenige des ersten Eingriffsschaftes (29a) und des ersten Stützschaftes (29b) ist.

6. Brotherstellungsvorrichtung nach einem der Ansprüche 2 bis 5, wobei die zweite Stützeinrichtung (26) aufweist:
einen zweiten Eingriffsschaft (26a) mit einem nicht-zylindrischen Querschnitt, der in das zweite Ende des Trommelkörpers (25) eingesetzt ist;
einen zweiten Stützschaft (26b), der drehbar durch die zweite Seitenwand des Ofenfaches (10) gehalten ist; und einen Kraftübertragungsschaft (26d), der von dem zweiten Stützschaft (26b) in Richtung des Faches für die elektrischen Komponenten vorsteht und mit dem Trommelantriebsteil verbunden ist.

7. Brotherstellungsvorrichtung nach Anspruch 6, wobei die zweite Stützeinrichtung (26) ferner ein zweites Einsetzbeschränkungsteil (26c) zwischen dem zweiten Eingriffsschaft (26a) und dem zweiten Stützschaft (26b) umfasst, wobei das zweite Einsetzbeschränkungsteil (26c) einen Durchmesser aufweist, der größer als derjenige des zweiten Eingriffsschaftes (26a) und des zweiten Stützschaftes (26b) ist.

8. Brotherstellungsvorrichtung nach Anspruch 7, wobei das erste Einsetzbeschränkungsteil (26c) die Strecke beschränkt, welche die erste Stützeinrichtung (29) in den Trommelkörper (25) eingesetzt werden kann, und das zweite Einsetzbeschränkungsteil (26c) die Strecke beschränkt, welche die zweite Stützeinrichtung (26) in den Trommelkörper (25) eingesetzt werden kann.

9. Brotherstellungsvorrichtung nach einem der Ansprüche 4 bis 8, wobei der Trommelkörper (25) eine erste Aufnahmeeinrichtung (25a) mit einem nicht-kreisförmigen Querschnitt aufweist, um den ersten Eingriffsschaft (29a) der ersten Stützeinrichtung (29) aufzunehmen, wobei der erste Eingriffsschaft (29a) in die erste Aufnahmeeinrichtung (25a) gedrückt und eingesetzt ist, um in die erste Aufnahmeeinrichtung (25a) zu passen, wodurch verhindert wird, dass sich die erste Stützeinrichtung (29) während des Betriebs der Knettrommeln (20) frei relativ zu dem Trommelkörper (25) drehen oder von diesem trennen kann.

10. Brotherstellungsvorrichtung nach Anspruch 9, wobei der Trommelkörper (25) eine zweite Aufnahmeeinrichtung (25b) mit einem nicht-kreisförmigen Querschnitt aufweist, um den zweiten Eingriffsschacht (26a) der zweiten Stützeinrichtung (26) aufzunehmen, wobei der zweite Eingriffsschacht (26a) in die zweite Aufnahmeeinrichtung (25b) gepresst und eingesetzt ist, um in die zweite Aufnahmeeinrichtung (25b) zu passen, wodurch verhindert wird, dass sich die zweite Stützeinrichtung (26) während des Betriebs der Knettrommeln (20) frei relativ zum Trommelkörper (25) drehen oder von diesem trennen kann.

11. Brotherstellungsvorrichtung nach einem der Ansprüche 3 bis 10, wobei der erste Eingriffsschaft einen polygonalen Querschnitt aufweist, und wobei der zweite Eingriffsschacht (26a) einen polygonalen Querschnitt aufweist.

12. Brotherstellungsvorrichtung nach einem der Ansprüche 6 bis 10, die ferner eine Lagerung in der ersten Seitenwand des Ofenfaches (10) aufweist, wobei der erste Stützschaft (29b) mit der Lagerung in Eingriff ist, um den Trommelkörper (25) laufruhig zu drehen, und die eine Lagerung in der zweiten Seitenwand des Ofenfaches (10) aufweist, wobei der zweite Stützschaft (26a) mit der Lagerung in Eingriff ist, um den Trommelkörper (25) laufruhig zu drehen.

13. Brotherstellungsvorrichtung nach einem der Ansprüche 6 bis 12, wobei der erste Stützschaft (20b) das erste Ende des Trommelkörpers (25) stützt, und wobei der zweite Stützschaft (26b) das zweite Ende des Trommelkörpers (25) stützt.

14. Brotherstellungsvorrichtung nach einem der vorhergehenden Ansprüche, wobei der Trommelkörper (25) eine Halteeinrichtung (27) aufweist, die lösbar mit dem Trommelkörper (25) verbunden ist, um das Ende des Mischbeutels (50) zu halten, wobei die Halteeinrichtung (27) ein Mischbeutelkontaktteil (27a), das in einer zylindrischen Fläche des Trommelkörpers (25) als eine ebene Form entlang einer Längsrichtung des Trommelkörpers ausgebildet ist; und
mehrere Haltevorsprünge (27b), die von dem Mischbeutelkontaktteil vorstehen, um mit dem Ende des Mischbeutels (50) in Eingriff zu kommen und dieses zu halten, wobei die Haltevorsprünge (27b) voneinander um einen vorbestimmten Abstand entlang der Längsrichtung des Trommelkörpers (25) beabstandet sind.

## Revendications

1. Machine de panification ayant un logement de four (10), un logement de composants électriques, et des tambours pétrisseurs (20) espacés l'un de l'autre à l'intérieur du logement de four (10) pour pétrir des ingrédients de pain contenus dans un sac de mélange (50), chaque tambour pétrisseur (20) comprenant :
un corps de tambour (25) sur lequel est enroulée une extrémité du sac de mélange (50) ; **caractérisée en ce que** la machine de panification comprend de plus :
un premier support (29) venant en prise de manière amovible avec une première extrémité du corps de tambour (25), présentant une section transversale qui n'est pas cylindrique, et venant en prise avec une première paroi latérale du logement de four (10) et étant supporté de manière rotative par la première paroi latérale du logement de four (10) ; et
un second support (26) venant en prise de manière amovible avec une seconde extrémité du corps de tambour (25), présentant une section transversale qui n'est pas cylindrique, et venant en prise avec une seconde paroi latérale du logement de four (10) et étant supporté de manière rotative par la seconde paroi latérale du logement de four (10).

2. Machine de panification selon la revendication 1, comprenant de plus une partie d'entraînement de tambour dans le logement des composants électriques pour faire tourner les tambours pétrisseurs (20).

3. Machine de panification selon la revendication 2, dans laquelle le corps de tambour (25) comprend une pluralité de saillies de maintien (27b) pour maintenir l'extrémité du sac de mélange (50), les saillies de maintien (27b) étant espacées les unes des autres par une distance prédéterminée dans le sens de la longueur du corps de tambour (25).

4. Machine de panification selon l'une quelconque des revendications 2 ou 3, dans laquelle le premier support (29) comprend :
une première tige de mise en prise (29a) présentant une section transversale qui n'est pas cylindrique, insérée dans la première extrémité du corps de tambour (25) ; et
une première tige de support (29b) supportée de manière rotative par la première paroi latérale du logement de four (10).

5. Machine de panification selon la revendication 4, dans laquelle le premier support (29) comprend de plus une première partie de limitation d'insertion (29c) entre la première tige de mise en prise (29a) et la première tige de support (29b), la première partie de limitation d'insertion (29c) présentant un diamètre supérieur à celui de la première tige de mise en prise (29a) et à celui de la première tige de support (29b).

6. Machine de panification selon l'une quelconque des revendications 2 à 5, dans laquelle le second support (26) comprend :
une seconde tige de mise en prise (26a) présentant une section transversale qui n'est pas cylindrique, insérée dans la seconde extrémité du corps de tambour (25) ;
une seconde tige de support (26b) supportée de manière rotative par la seconde paroi latérale du logement de four (10) ; et
un arbre de transmission d'énergie (26d) faisant saillie hors de la seconde tige de support (26b) vers le logement des composants électriques et étant relié à la partie d'entraînement du tambour.

7. Machine de panification selon la revendication 6, dans laquelle le second support (26) comprend de plus une seconde partie de limitation d'insertion (26c) entre la seconde tige de mise en prise (26a) et la seconde tige de support (26b), la seconde partie de limitation d'insertion (26c) présentant un diamètre supérieur à celui de la seconde tige de mise en prise (26a) et à celui de la seconde tige de support (26b).

8. Machine de panification selon la revendication 7, dans lequel la première partie de limitation d'insertion (26c) limite la distance dont le premier support (29) peut être inséré dans le corps de tambour (25), et la seconde partie de limitation d'insertion (26c) limite la distance dont le second support (26) peut être inséré dans le corps de tambour (25).

9. Machine de panification selon l'une quelconque des revendications 4 à 8, dans laquelle le corps de tambour (25) comprend un premier dispositif de réception (25a) présentant une section transversale qui n'est pas circulaire pour recevoir la première tige de mise en prise (29a) du premier support (29), la première tige de mise en prise (29a) étant pressée et insérée dans le premier dispositif de réception (25a) de manière à s'insérer dans le premier dispositif de réception (25a), en empêchant de ce fait le premier support (29) de tourner en roue libre ou de se séparer du corps de tambour (25) lors du fonctionnement des tambours pétrisseurs (20).

10. Machine de panification selon la revendication 9, dans laquelle le corps de tambour (25) comprend un second dispositif de réception (25b) présentant une section transversale qui n'est pas circulaire pour recevoir la seconde tige de mise en prise (26a) du second support (26), la seconde tige de mise en prise (26a) étant pressée et insérée dans le second dispositif de réception (25b) de manière à s'insérer dans le second dispositif de réception (25b), en empêchant de ce fait le second support (26) de tourner en roue libre ou de se séparer du corps de tambour (25) lors du fonctionnement des tambours pétrisseurs (20).

11. Machine de panification selon l'une quelconque des revendications 4 à 10, dans laquelle la première tige de mise en prise présente une section transversale polygonale, et la seconde tige de mise en prise (26a) présente une section transversale polygonale.

12. Machine de panification selon l'une quelconque des revendications 6 à 10, comprenant de plus un roulement dans la première paroi latérale du logement de four (10), la première tige de support (29b) venant en prise avec le roulement pour faire tourner sans à-coups le corps de tambour (25), et un roulement dans la seconde paroi latérale du logement de four (10), la seconde tige de support (26a) venant en prise avec le roulement pour faire tourner sans à-coups le corps de tambour (25).

13. Machine de panification selon l'une quelconque des revendications 6 à 12, dans laquelle la première tige de support (20b) supporte la première extrémité du corps de tambour (25), et la seconde tige de support (26b) supporte la seconde extrémité du corps de tambour (25).

14. Machine de panification selon l'une quelconque des revendications précédentes, dans laquelle le corps de tambour (25) comprend un dispositif de maintien (27) relié de manière amovible au corps de tambour (25) pour maintenir l'extrémité du sac de mélange (50), le dispositif de maintien (27) comprenant :
une partie de mise en contact du sac de mélange (27a) formée dans une surface cylindrique du corps de tambour (25) comme une forme plate dans le sens de la longueur du corps de tambour ; et
une pluralité de saillies de maintien (27b) faisant saillie hors de la partie de mise en contact du sac de mélange afin de venir en prise avec, et de maintenir, l'extrémité du sac de mélange (50), les saillies de maintien (27b) étant espacées les unes des autres par une distance prédéterminée dans le sens de la longueur du corps de tambour (25).
